# EUROPÄISCHE PATENTSCHRIFT

(11) **EP 2 054 992 B1**
(45) Veröffentlichungstag und Bekanntmachung des Hinweises auf die Patenterteilung: **12.12.2012**
(21) Anmeldenummer: 07787944.3
(22) Anmeldetag: 26.07.2007
(51) Int. Cl.: H02K 1/28, H02K 1/30, H02K 15/03

(54) **ROTOR FÜR EINEN ELEKTROMOTOR**
ROTOR FOR AN ELECTRIC MOTOR
ROTOR POUR MOTEUR ÉLECTRIQUE

(30) Priorität: 14.08.2006 DE 102006038017
(43) Veröffentlichungstag der Anmeldung: 06.05.2009
(73) Patentinhaber: Brose Fahrzeugteile GmbH & Co. KG, Würzburg, 97076 Würzburg (DE)
(72) Erfinder: ZAPS, Klaus, 97332 Volkach (DE)
(74) Vertreter: Isarpatent
(86) Internationale Anmeldenummer: PCT/EP2007/057724
(87) Internationale Veröffentlichungsnummer: WO 2008/019932

(56) Entgegenhaltungen:
- DE-A1- 10 110 660
- DE-A1- 10 314 394
- JP-A- 2002 204 540

## Beschreibung

Die Erfindung betrifft einen Rotor für einen Elektromotor, der eine Rotorwelle, ein auf der Rotorwelle befestigtes Rotorblechpaket, einen das Rotorblechpaket umgebenden Ringkörper und einen zwischen dem Rotorblechpaket und dem Ringkörper vorgesehen Spalt, in welchen zur Fixierung des Ringkörpers am Rotorblechpaket Klebstoff eingebracht ist, aufweist.

Es sind bereits bürstenlose Gleichstrommotoren bekannt, bei denen sich Permanentmagnete auf der Rotoroberfläche befinden. Diese Permanentmagnete sind üblicherweise als Ringmagnete realisiert. Bei der Anordnung derartiger Permanentmagnete auf der Rotoroberfläche ist zwischen der Rotorwelle und den Permanentmagneten ein Rückschlusskörper vorgesehen, welcher fest mit der Rotorwelle verbunden ist. Die ringförmig realisierten Permanentmagnete sind auf diesen Rückschlusskörper geklebt, so dass ein Drehmoment über den Rückschlusskörper auf die Rotorwelle übertragen werden kann. Die Breite des Klebespalts zwischen dem Ringmagnet und dem Rückschlüsskörper muss eine Ober- und eine Untergrenze einhalten, um eine optimale Klebung zu erreichen. Diese Klebung sollte derart erfolgen, dass der Ringmagnet zentrisch sitzt, um eine Unwucht zu verhindern. Zu diesem Zweck wird üblicherweise eine aufwendige Klebevorrichtung bereitgestellt, welche mit den zu verklebenden Bauteilen zu bestücken ist.

Aus der DE 103 14 394 A1 sind ein Rotor für einen bürstenlosen Gleichstrommotor und ein Verfahren zur Montage eines solchen Rotors bekannt. Dieser bekannte Rotor weist eine Welle, einen auf der Welle angeordneten Rückschlusskörper und einen den Rückschlusskörper umgebenden Ringmagneten auf. Im axial verlaufenden Bereich zwischen dem Rückschlusskörper und dem Ringmagneten ist ein Spalt gebildet. Weiterhin ist ein Halteelement vorgesehen, das außerhalb des Spaltes einerseits mit der Welle oder dem Rückschlusskörper und andererseits mit dem Ringmagneten verbunden ist. Durch dieses Halteelement ist der Ringmagnet kraftschlüssig mit der Welle bzw. dem Rückschlusskörper verbunden und zudem gegenüber der Welle bzw. dem Rückschlusskörper zentriert. Weiterhin ist vorzugsweise ein Mantel vorgesehen, der den Ringmagneten umgibt. Das Halteelement und der Mantel sind einstückig als Hülse ausgebildet, wobei der Ringmagnet durch Einpressen in die Hülse mit dieser kraftschlüssig verbunden ist. Bei diesem bekannten Rotor wird eine zentrale Anordnung des Ringmagneten gegenüber der Rotorwelle bzw. dem Rückschlusskörper erreicht, ohne dass eine Klebung erforderlich ist.

Die Aufgabe der Erfindung besteht darin, einen Rotor mit den im Oberbegriff des Anspruchs 1 angegebenen Merkmalen derart weiterzubilden, dass die Koaxialität des Ringkörpers in vereinfachter Weise sichergestellt ist.

Diese Aufgabe wird durch einen Rotor mit den im Anspruch 1 angegebenen Merkmalen gelöst. Vorteilhafte Ausgestaltungen und Weiterbildungen der Erfindung sind in den abhängigen Ansprüchen angegeben.

Gemäß der vorliegenden Erfindung sind dem Klebstoff, der in den zwischen dem Rotorblechpaket und dem Ringkörper vorgesehenen Spalt eingebracht ist, als Abstandshalter dienende Formkörper beigemengt. Durch diese dem Klebstoff beigemengten Formkörper ist gewährleistet, dass im Bereich der gesamten Mantelfläche des Rotorblechpaketes ein Klebespalt mit einheitlichen Abmessungen vorliegt. Die genannten Formkörper, die vorzugsweise kugelförmig ausgebildet sind, stellen eine Zentrierung des Ringkörpers bezüglich der Rotorwelle sicher. Sie bestehen aus einem formstabilen, elektrisch nicht leitenden Material, so dass die elektrischen Eigenschaften des Rotors und damit des gesamten Elektromotors nicht in unerwünschter Weise beeinflusst werden.

Vorzugsweise ist die Mantelfläche des Rotorblechpaketes mit Erhöhungen und Vertiefungen versehen. Dies ist in einfacher

Weise dadurch realisierbar, dass das Rotorblechpaket aus einer Vielzahl von Einzelblechen zusammengesetzt ist, die jeweils um 60° verdreht axial mit einem Nachbarblech verknüpft sind und jeweils auf ihrer Mantelfläche in Umfangsrichtung im Abstand von 60° abwechselnd mit Erhöhungen und Vertiefungen versehen sind. Derartige Einzelbleche sind in einfacher Weise mittels eines Stanzvorganges herstellbar.

Vorzugsweise werden dem Klebstoff Kügelchen unterschiedlichen Durchmessers beigemengt. Diese Durchmesser sind derart gewählt, dass ein maximaler und ein minimaler Klebespalt eingehalten werden kann. Kügelchen, deren Durchmesser für den jeweils vorliegenden Klebespalt zu groß sind, lagern sich in den Vertiefungen der Mantelfläche des Rotorblechpaketes ab, während die anderen Kügelchen die gewünschte Zentrierung bzw. Koaxialität des Ringkörpers gewährleisten.

Weitere vorteilhafte Eigenschaften der Erfindung ergeben sich aus deren nachfolgender beispielhafter Erläuterung anhand der Figuren. Es zeigt
- Figur 1: eine schematische Längsschnittdarstellung eines Rotors gemäß der Erfindung und
- Figur 2: eine perspektivische Ansicht des Rotorblechpaketes des in der Figur 1 dargestellten Rotors.

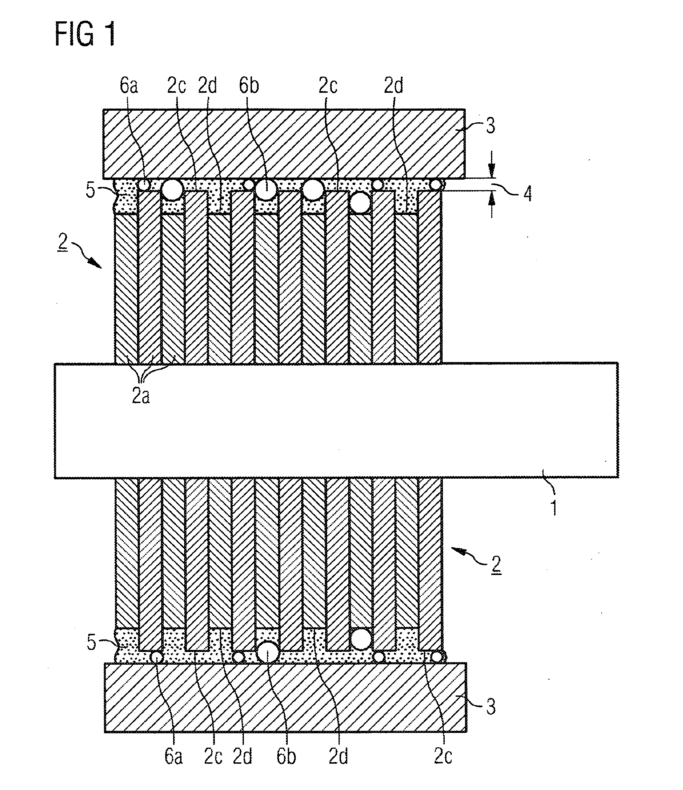

Die Figur 1 zeigt eine schematische Längsschnittdarstellung eines Rotors gemäß der Erfindung. Dieser Rotor weist eine Rotorwelle 1 auf, auf welcher ein Rotorblechpaket 2 befestigt ist. Dieses ist aus einer Vielzahl von Einzelblechen 2a zusammengesetzt. Die Mantelfläche des Rotorblechpaketes weist Erhöhungen 2c und Vertiefungen 2d auf. Das Rotorblechpaket ist von einem Ringkörper 3 umgeben. Zwischen dem Rotorblechpaket 2 und dem Ringkörper 3 befindet sich ein Spalt 4. In diesen Spalt 4 ist Klebstoff 5 eingebracht, um den Ringkörper 3 am Rotorblechpaket zu fixieren.

Gemäß der vorliegenden Erfindung sind dem Klebstoff Formkörper 6a, 6b beigemengt, die als Abstandshalter dienen. Durch diese Formkörper ist sichergestellt, dass zwischen dem Rotorblechpaket 2 und Ringkörper 3 stets ein gewünschter Minimalabstand besteht. Weiterhin ist durch diese Formkörper die gewünschte Zentrizität bzw. Koaxialität des Ringkörpers zur Rotorwelle gewährleistet.

Zur Verklebung des mit der Rotorwelle 1 fest verbundenen Rotorblechpaketes 2 mit dem Ringkörper 3 wird zunächst in einem ersten Schritt der Klebstoff 5, welchem die Kügelchen 6a und 6b beigemengt sind, auf die Mantelfläche des Rotorblechpaketes aufgetragen. Dann erfolgt in einem zweiten Schritt ein Aufschieben des Ringkörpers 3 in Axialrichtung, ggf. bei gleichzeitigem Drehen, auf das mit Klebstoff versehene Rotorblechpaket. Bei diesem Aufschieben werden die Kügelchen 6b, deren Durchmesser für den vorliegenden Klebespalt 4 zu groß sind, in die Vertiefungen 2d der Mantelfläche des Rotorblechpaketes gedrückt, wie es in der Figur 1 veranschaulicht ist. Die Kügelchen 6a mit dem kleineren Durchmesser verbleiben bei diesem Aufschieben in ausreichender Anzahl zwischen den Erhöhungen 2c der Mantelfläche und dem Ringkörper, wodurch der gewünschte Abstand zwischen dem Ringkörper und dem Rotorblechpaket eingestellt und die gewünschte Zentrizität bzw. Koaxialität des Ringkörpers relativ zur Rotorwelle sichergestellt wird.

Bei den Formkörpern 6a und 6b handelt es sich vorzugsweise um kleine Kügelchen aus einem formstabilen, elektrisch nicht leitenden Material, beispielsweise aus Glas oder aus Kunststoff. Dadurch ist sichergestellt, dass die elektrischen Eigenschaften des Rotors und damit des gesamten Elektromotors nicht in unerwünschter Weise beeinflusst werden.

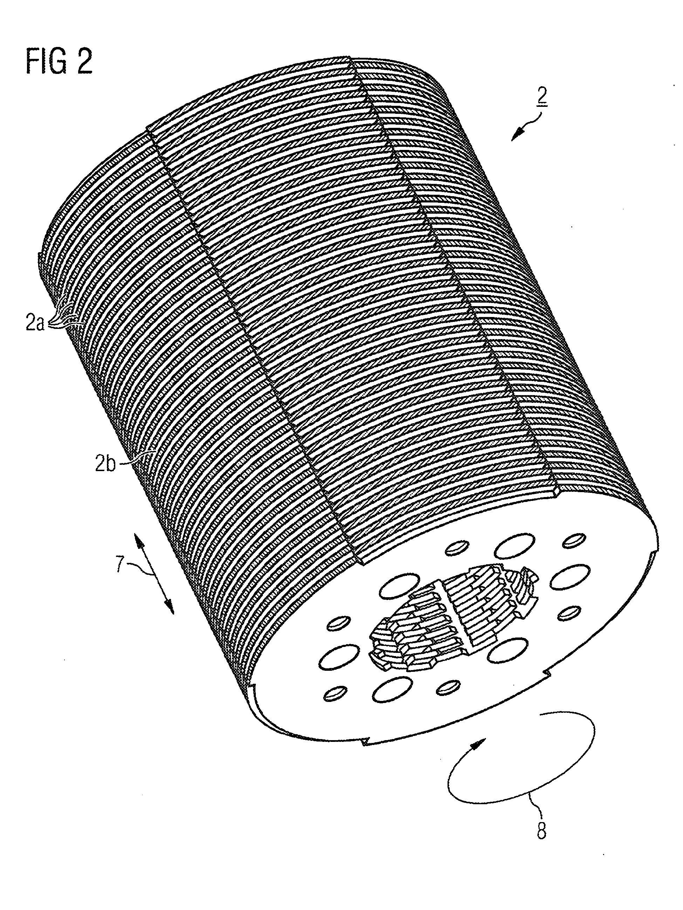

Ein Rotorblechpaket 2, wie es in der Figur 1 gezeigt ist, kann in einfacher Weise kostenneutral gegenüber bisher verwendeten Rotorblechpaketen hergestellt werden. Es besteht, wie aus der perspektivischen Ansicht gemäß der Figur 2 hervorgeht, aus einer Vielzahl von Einzelblechen 2a, die jeweils mittels eines Stanzvorganges geformt werden. Die Mantelfläche 2b des Rotorblechpaketes 2 weist sowohl in Axialrichtung 7 als auch in Umfangsrichtung 8 abwechselnd Erhöhungen und Vertiefungen auf. Zu diesem Zweck ist jedes Einzelblech mit sechs Verknüpfungspunkten versehen, mittels derer das Einzelblech mit einem Nachbarblech verbindbar ist. Jedes Einzelblech weist auf seiner Mantelfläche in Umfangsrichtung im Abstand von 60° abwechselnd Erhöhungen und Vertiefungen auf. Einander benachbarte Einzelbleche sind zueinander jeweils um 60° verdreht aneinander befestigt. Dies hat insgesamt zur Folge, dass die Mantelfläche des Rotorblechpaketes, wie aus der Figur 2 ersichtlich ist, sowohl in Axialrichtung 7 als auch in Umfangsrichtung 8 abwechselnd die gewünschten Erhöhungen und Vertiefungen aufweist, die einer Riffelung der Mantelfläche des Rotorblechpaketes entsprechen.

Gemäß der vorliegenden Erfindung wird nach alledem ein rotationssymmetrischer Klebespalt bereitgestellt, der eine koaxiale Verklebung des Ringkörpers 3 auf der Mantelfläche des Rotorblechpaketes 2 sicherstellt. Die Notwendigkeit der Bereitstellung eines aufwendigen mechanischen Aufbaus einer Klebehilfsvorrichtung, die beim Stand der Technik erforderlich ist, um einen zentrischen Sitz des Ringkörpers zu erreichen, entfällt.

Weiterhin wird durch die beschriebene Riffelung der Mantelfläche des Rotorblechpaketes die Festigkeit der Klebung verbessert. Rundlaufabweichungen des Rotors werden verringert.

Die Riffelung der Mantelfläche des Rotorblechpaketes ermöglich eine Zentrierung im gesamten Klebespalt-Toleranzfeld dadurch, dass sich die Kügelchen, die für den sich einstellenden Klebespalt zu groß sind, in den Vertiefungen der Mantelfläche ablagern. Weiterhin wird erreicht, dass sich in den Vertiefungen bzw. in der Riffelung stets eine definierte Klebstoffmenge einlagert. Dadurch wird bewirkt, dass die gesamte Klebefläche mit Klebstoff benetzt ist, was den Klebevorgang insgesamt verbessert.

## Patentansprüche

1. Rotor für einen Elektromotor, mit
- einer Rotorwelle (1),
- einem auf der Rotorwelle befestigten Rotorblechpaket (2),
- einem das Rotorblechpaket umgebenden Ringkörper (3),
- einem zwischen dem Rotorblechpaket und dem Ringkörper vorgesehenen Spalt (4), in welchen zur Fixierung des Ringkörpers am Rotorblechpaket Klebstoff (5) eingebracht ist, **dadurch gekennzeichnet, dass**
- dem Klebstoff als Abstandshalter dienende Formkörper (6a,6b) beigemengt sind.

2. Rotor nach Anspruch 1,
**dadurch gekennzeichnet,**
**dass** die Formkörper kugelförmig ausgebildet sind.

3. Rotor nach Anspruch 1 oder 2,
**dadurch gekennzeichnet,**
**dass** die Formkörper aus einem formstabilen, elektrisch nicht leitenden Material bestehen.

4. Rotor nach Anspruch 3,
**dadurch gekennzeichnet,**
**dass** die Formkörper aus Glas oder Kunststoff bestehen.

5. Rotor nach einem der vorhergehenden Ansprüche, **dadurch gekennzeichnet,**
**dass** die Mantelfläche (2b) des Rotorblechpaketes (2) Erhöhungen (2c) und Vertiefungen (2d) aufweist.

6. Rotor nach Anspruch 5,
**dadurch gekennzeichnet,**
**dass** die Mantelfläche des Rotorblechpaketes sowohl in Umfangsrichtung als auch in Axialrichtung abwechselnd Erhöhungen und Vertiefungen aufweist.

7. Rotor nach Anspruch 6,
**dadurch gekennzeichnet,**
**dass** das Rotorblechpaket aus einer Vielzahl von Einzelblechen zusammengesetzt ist, die Einzelbleche jeweils mit Verknüpfungspunkten versehen sind, mittels derer jedes Einzelblech um jeweils 60° verdreht axial mit einem Nachbarblech verknüpft ist, und jedes Einzelblech auf seiner Mantelfläche in Umfangsrichtung im Abstand von 60° abwechselnd Erhöhungen und Vertiefungen aufweist.

8. Rotor nach einem der Ansprüche 5 - 7, **dadurch gekennzeichnet,**
**dass** dem Klebstoff Formkörper mit unterschiedlichen Abmessungen beigemengt sind, wobei die Formkörper mit den größeren Abmessungen in den Vertiefungen der Mantelfläche des Rotorblechpaketes positioniert sind.

9. Rotor nach Anspruch 8,
**dadurch gekennzeichnet,**
**dass** die Formkörper aller Abmessungen kugelförmig ausgebildet sind.

## Claims

1. A rotor for an electric motor, having
- a rotor shaft (1),
- a laminated rotor core (2) attached to the rotor shaft,
- an annular member (3) surrounding the laminated rotor core,
- a gap (4) provided between the laminated rotor core and the annular member, into which adhesive (5) is introduced so as to fix the annular member to the laminated rotor core,
**characterised in that** shaped articles (6a, 6b) serving as spacers are admixed with the adhesive.

2. A rotor according to claim 1, **characterised in that** the shaped articles are spherical in form.

3. A rotor according to claim 1 or claim 2, **characterised in that** the shaped articles consist of a dimensionally stable, electrically non-conductive material.

4. A rotor according to claim 3, **characterised in that** the shaped articles consist of glass or plastics.

5. A rotor according to any one of the preceding claims, **characterised in that** the circumferential surface (2b) of the laminated rotor core (2) comprises raised portions (2c) and recesses (2d).

6. A rotor according to claim 5, **characterised in that** the circumferential surface of the laminated rotor core comprises alternating raised portions and recesses in both the circumferential direction and the axial direction.

7. A rotor according to claim 6, **characterised in that** the laminated rotor core is composed of a plurality of individual laminations, the individual laminations are each provided with linkage points, by means of which each individual lamination is linked axially, each rotated through 60°, to a neighbouring lamination, and each individual lamination comprises alternating raised portions and recesses on its circumferential surface spaced by 60° in the circumferential direction.

8. A rotor according to any one of claims 5 - 7, **characterised in that** shaped articles of different sizes are admixed with the adhesive, the shaped articles of the larger sizes being positioned in the recesses in the circumferential surface of the laminated rotor core.

9. A rotor according to claim 8, **characterised in that** the shaped articles of all sizes are spherical in form.

## Revendications

1. Rotor pour un moteur électrique, comportant
- un arbre de rotor (1),
- un empilage de tôles de rotor (2) fixé sur l'arbre de rotor,
- un corps annulaire (3) entourant l'empilage de tôles de rotor,
- un interstice (4) prévu entre l'empilage de tôles de rotor et le corps annulaire, dans lequel interstice un adhésif est introduit pour fixer le corps annulaire à l'empilage de tôles de rotor,
**caractérisé par le fait que** des corps façonnés (6a, 6b) sont ajoutés à cet adhésif en tant qu'éléments d'espacement.

2. Rotor selon la revendication 1, **caractérisé par le fait que** les corps façonnés ont une forme sphérique.

3. Rotor selon la revendication 1 ou 2, **caractérisé par le fait que** les corps façonnés sont constitués d'un matériau indéformable, électriquement non conducteur.

4. Rotor selon la revendication 3, **caractérisé par le fait que** les corps façonnés sont constitués de verre ou de matière plastique.

5. Rotor selon l'une des revendications précédentes, **caractérisé par le fait que** la surface d'enveloppe (2b) de l'empilage de tôles de rotor (2) présente des surélévations (2c) et des creux (2d).

6. Rotor selon la revendication 5, **caractérisé par le fait que** la surface d'enveloppe de l'empilage de tôles de rotor présente en alternance, autant dans le sens circonférentiel que dans le sens axial, des surélévations et des creux.

7. Rotor selon la revendication 6, **caractérisé par le fait que** l'empilage de tôles de rotor est composé d'une pluralité de tôles individuelles, les tôles individuelles sont respectivement prévuées de points de connexion au moyen desquels chaque tôle individuelle respectivement tordue à 60° est raccordée axialement avec une tôle adjacente, et chaque tôle individuelle présente sur sa surface d'enveloppe dans le sens circonférentiel en alternance des surélévations et des creux à une distance de 60°.

8. Rotor selon l'une des revendications 5 à 7, **caractérisé par le fait que** des corps façonnés de différentes dimensions sont ajoutés à l'adhésif, les corps façonnés de plus grandes dimensions étant positionnés dans les creux de la surface d'enveloppe de l'empilage de tôles de rotor.

9. Rotor selon la revendication 8, **caractérisé par le fait que** les corps façonnés de toutes dimensions ont une forme sphérique.
